(19) Europäisches Patentamt / European Patent Office / Office européen des brevets

(11) **EP 2 112 620 B1**

(12) **EUROPEAN PATENT SPECIFICATION**

(45) Date of publication and mention of the grant of the patent:
**18.03.2015 Bulletin 2015/12**

(51) Int Cl.:
**G06K 9/38** *(2006.01)*    **G06K 9/32** *(2006.01)*

(21) Application number: **09150847.3**

(22) Date of filing: **19.01.2009**

(54) **Image binarization using dynamic sub-image division**

Bildbinärisierung unter Verwendung einer dynamischen Unterbilddivision

Binarisation d'images utilisant la division dynamique en sous-images

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **17.01.2008 US 6517 P**

(43) Date of publication of application:
**28.10.2009 Bulletin 2009/44**

(73) Proprietor: **IMDS America Inc.**
**Montreal, Québec H2Y 3P6 (CA)**

(72) Inventor: **Zeng, Yijun**
**Montreal, Québec H4E 2T9 (CA)**

(74) Representative: **Modiano, Micaela Nadia**
**Modiano Josif Pisanty & Staub Ltd**
**Thierschstrasse 11**
**80538 München (DE)**

(56) References cited:
**US-A1- 2006 120 602**

• **DAVIES E ROY: "Chapter 4: Thresholding Techniques" In: DAVIES E ROY ED: "Machine vision: theory, algorithms, practicalities", 1 January 2005 (2005-01-01), ELSEVIER, AMSTERDAM, XP002658784, ISBN: 978-0-12-206093-9 pages 103-129, * Section 4.4.2 ***
• **ARNULFO PEREZ ET AL: "An Iterative Thresholding Algorithm for Image Segmentation", IEEE TRANSACTIONS ON PATTERN ANALYSIS AND MACHINE INTELLIGENCE, IEEE SERVICE CENTER, LOS ALAMITOS, CA, US, vol. 30, no. 6, 1 November 1987 (1987-11-01), pages 742-751, XP011243060, ISSN: 0162-8828**
• **ANDRÃ CR S MARZAL ET AL: "Matrics, a Car License Plate Recognition System", PATTERN RECOGNITION AND IMAGE ANALYSIS; [LECTURE NOTES IN COMPUTER SCIENCE;; LNCS], SPRINGER BERLIN HEIDELBERG, BERLIN, HEIDELBERG, vol. 4477, 6 June 2007 (2007-06-06), pages 282-289, XP019094917, ISBN: 978-3-540-72846-7**
• **LLORENS D ET AL: "Car license plates extraction and recognition based on connected components analysis and HMM decoding", LECTURE NOTES IN COMPUTER SCIENCE - PATTERN RECOGNITION AND IMAGE ANALYSIS: SECOND IBERIAN CONFERENCE, IBPRIA 2005. PROCEEDINGS 2005, vol. 3522, no. I, 2005, pages 571-578, XP002658785, SPRINGER VERLAG DE**

**Description**

## CROSS-REFERENCE TO RELATED APPLICATIONS

The present application requests priority on United States Provisional Application Number 61/006,517 filed on January 17, 2008.

## FIELD OF THE INVENTION

The present invention relates to image binarization. More specifically, but not exclusively, the present invention relates to image binarization using dynamic sub-image division.

## BACKGROUND OF THE INVENTION

Image binarization converts an image of gray levels (grayscale) to a black and white image. The simplest way to use image binarization is to choose a threshold value, and classify all pixels with values above this threshold as white, and all other pixels as black. The problem then is how to select the correct threshold. In many cases, finding one threshold compatible to the entire image is very difficult, and in many cases even impossible. Therefore, adaptive image binarization is needed where an optimal threshold is chosen for each image area. Therefore, when a different threshold can be used for different regions in the image. This is known as adaptive thresholding or as local or dynamic thresholding [see Pierre D. Wellner, "Adaptive Thresholding for the DigitalDesk", http://www,xrce.xerox.com/publis/cam-trs/pdf/1993/epc-1993-110.pdf.]

Image binarization is a useful process in a variety of different fields such as public safety for example.

In many public sites, such as parking lots, street intersections, highways, surveillance cameras are installed for public safety purposes or management. The installed cameras produce a huge number of images with important information. It is therefore, critical to provide an effective method for precisely and rapidly retrieving this information from the images. Often, at sites where surveillance cameras take images, the luminance is usually uneven on the objects in the images making it difficult in producing a binarized image of good quality

Optical character recognition or OCR methods, which work on a 1-bit image, are useful in retrieving information from images. The images provided by the surveillance cameras may seem black and white to the naked eye but in fact they are in grayscale. Binarizing the images taken by the cameras to be 1-bit is a key step for OCR to precisely retrieve information from the images.

Binarizing a grayscale image converts for example an 8-bit grayscale image into a 1-bit black and white image. The key here is to determine during conversion whether a pixel on the original image should be converted to be black or white.

Converting to a grayscale pixel to a black or white pixel

In an example of a grayscale image, pixels are represented by an 8-bit set. The value of an 8-bit set is in the range [0, 255], which indicates the color depth of pixels. For a 1-bit image, its pixels are represented by 1 bit. Therefore, a pixel of a 1-bit image has only two possible color values, either 0 or 1.

To binarize a grayscale image to a corresponding binary image, we need a color value called a *threshold* to determine whether a pixel in the original image should be converted to a black or white pixel in its corresponding binary image. In essence we assign a color value to the pixel: 0 (white) or 1 (black).

Global threshold

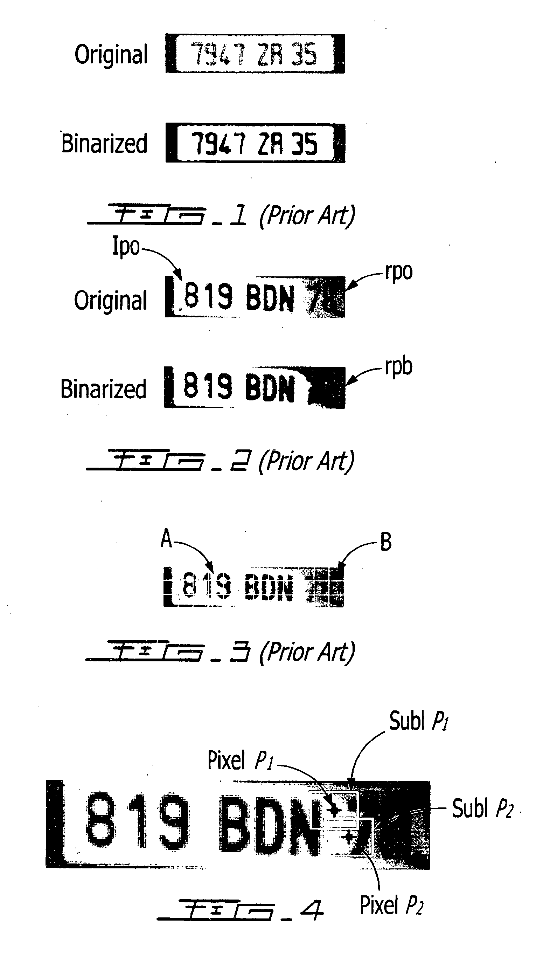

Using a single threshold for all pixels in a grayscale image, (e.g. global threshold), to binarize a grayscale image is the simplest way. Figure 1 shows the result (Binarized) of binarization of a grayscale car plate image (Original) using a global threshold to assign a black or white color value to each pixel. The original image is evenly lit and as such provides a good binarized image.

Yet, in most cases and especially in sites under surveillance, photographed objects are not properly or evenly lit and thus do not provide clear images.

Figure 2 shows the binarized result (Binarized) of a grayscale image (Original) of an unevenly lit car plate using again a global threshold. In the right-hand portion (rpo) of the original image the color of the background is almost as dark as foreground of the left-hand portion (lpo) of the original image. Thus, the right-hand portion (rpb) of the binarized image becomes black and unrecognizable even if the background and foreground in the right-and portion of the original image is distinguishable to the naked eye.

The above unacceptable result is due to uneven luminance on the car plate when the surveillance camera captured this image. When binarizing such an image with a global threshold, the background pixels in the right-hand portion are too dark and as such their color value is lesser than the global threshold, thus these pixels are assigned the color value 1 and the resulting background in the right-hand portion of the binarized image is converted to black.

Adaptive Thresholding

Since the use of a global threshold does not provide a binarized image of sufficient quality, using different thresholds in different parts of the image to be binarized is used to binarize an unevenly lit image. This is called *adaptive thresholding* and it is a commonly used method of image binarization.

As shown in Figure 1, images with even luminance are easy to handle and the result of binarization on such images is satisfactory. The basic idea of adaptive thresholding is to divide the image to be binarized into sub-images. The sub-image should be small enough so that each one can be considered as being evenly lit. But the sub-images should also be big enough to contain sufficient information.

As shown in Figure 3, to distinguish whether a pixel is in the background or the foreground, the value of the threshold for the sub-image *A* must be different from that of for the sub-image *B*. In this case, we need to take special care of the pixels crossing the border between two sub-images. There should be a smooth transition from one sub-image to another of the threshold value of the pixels across a border between the two sub-images. The foregoing is problematic to achieve with known techniques. One attempt of solving this problem is interpolation which is used to smoothen the threshold across the border between sub-images as described in K. Castleman, "Digital Image Processing", Prentice-Hall Signal Processing Series, 1979. But the interpolation is just an approximation; it does not really indicate how the luminance on the object smoothly transits from a point to another.

US 2006/120602 teaches a method for character segmentation. An image analyzer generates individual character images by binarizing a gray scale image of a horizontal row of characters using a general threshold method to generate a first image. The image analyzer also binarizes the gray scale image using an edge detection method to generate a second image. The image analyzer then determines a character row region of the second image by using horizontal projection analysis and isolates the character row region of the first image using the character row region of the second image. The character row region is used to generate the individual character images.

A drawback of known methods of binarization is that they do no provide satisfactory images with sufficient detail in a timely fashion.

## OBJECTS OF THE INVENTION

An object of the present invention is to provide an image binarization method using dynamic sub-image division.

## SUMMARY OF THE INVENTION

The invention relates to a method of binarizing a grayscale image in accordance with independent claim 1.

In accordance with an aspect of the present disclosure there is provided a method of binarizing a grayscale image into a black and white binarized image, said method comprising:

selecting a given pixel ($P$) in the grayscale image;

determining the color value ($V_P$) of $P$;

providing a sub-image ($SubI_P$) comprising $P$ as well as a number of neighbouring pixels;

determining the average color value ($A_p$) of all the pixels in $SubI_P$;

calculating the threshold ($T_P$) of $P$ by multiplying $A_p$ by a threshold coefficient ($C$);

converting $P$ to black if $V_P \leq T_P$ or to white if $V_P > T_P$;

repeating the above steps for each pixel of the grayscale image that is desired to be converted; and

obtaining a resulting black and white binarized image.

In accordance with an aspect of the present disclosure, there is provided a method of binarizing a grayscale image comprising a border surrounding characters into a black and white binarized image with a clear border and clear characters, said method comprising:

obtaining first and second binarized images of the grayscale image by dividing the grayscale image into sub-images for determining if a pixel is to be converted into white or black based on its threshold as compared to the average colour value of its sub-image, wherein one of the first and second binarized images provides a clear border and the other of the first and second binarized images provides clear characters;

removing the border in the binarized image with clearer characters to provide a binarized image without a border; and

combining the binarized image without a border with the binarized having a clear border so as to obtain a single binarized image having both clear characters and a clear border.

In accordance with an aspect of the present disclosure, there is provided a device for binarizing a grayscale image into a black and white binarized image, said device comprising;

a scanner for scanning the pixels of the grayscale image; and

a controller for receiving information from the scanner, said controller:

selecting a given pixel ($P$) in the grayscale image;

determining the color value ($V_P$) of $P$;

providing a sub-image ($SubI_P$) comprising $P$ as well as a number of neighbouring pixels;

determining the average color value ($A_P$) of all the pixels in $SubI_P$;

calculating the threshold ($T_P$) of $P$ by multiplying $A_p$ by a threshold coefficient ($C$);

converting $P$ to black if $V_P \leq T_P$ or to white if $V_P > T_P$;

repeating the above steps for each pixel of the grayscale image that is desired to be converted; and

obtaining a resulting black and white binarized image.

In accordance with an aspect of the present disclosure, there is provided a device for binarizing a grayscale image comprising a border surrounding characters into a black and white binarized image with a clear border and clear characters, said device comprising:

a scanner for scanning the pixels of the grayscale image;

a controller for receiving information from the scanner, said controller

obtaining first and second binarized images of the grayscale image by dividing the grayscale image into sub-images for determining if a pixel is to be converted into white or black based on its threshold as compared to the average colour value of its sub-image, wherein one of the first and second binarized images provides a clear border and the other of the first and second binarized images provides clear characters;

removing the border in the binarized image with clearer characters to provide a binarized image without a border; and

combining the binarized image without a border with the binarized having a clear border so as to obtain a single binarized image having both clear characters and a clear border.

Other objects, advantages and features of the present invention will become more apparent upon reading of the following non-restrictive description of non-limiting illustrative embodiments thereof, given by way of example only with reference to the accompanying drawings.

## BRIEF DESCRIPTION OF THE DRAWINGS

In the appended drawings, where like reference numerals denote like elements throughout and in where:

Figure 1 shows a grayscale image of an evenly lit car plate and its corresponding binarized image obtained by using the prior art global threshold method;

Figure 2 shows an grayscale image of an unevenly lit car plate and its corresponding binarized image obtained by using the prior art global threshold method;

Figure 3 shows a grayscale image divided into sub-images for binarization in accordance with the prior art adaptive threshold method;

Figure 4 shows a grayscale image when divided by dynamic sub-image division in accordance with a non-restrictive illustrative embodiment of the present invention;

Figure 5A is a schematic representation of a grayscale image and the sub-image of a pixel of this grayscale image obtained with dynamic sub-image division in accordance with a non-restrictive illustrative embodiment of the present invention;

Figure 5B is an enlarged view of the sub-image of Figure 5A;

Figures 6A, 6B and 6C are examples of grayscale images and their corresponding binarized images having been obtained with dynamic sub-image division in accordance with a non-restrictive illustrative embodiment of the present invention;

Figure 7 shows a grayscale image and its corresponding binarized image obtained for clear characters with dynamic sub-image division in accordance with a non-restrictive illustrative embodiment of the present invention

Figure 8 shows another binarized image obtained from the grayscale image of Figure 7 for a clear border with dynamic sub-image division in accordance with a non-restrictive illustrative embodiment of the present invention;

Figure 9 shows a grayscale image and two corresponding binarized images obtained for clear characters and a clear border respectively with dynamic sub-image division in accordance with a non-restrictive illustrative embodiment of the present invention;

Figure 10 shows two binarized images obtained from the grayscale image of Figure 7 clear characters and a clear border respectively with dynamic sub-image division in accordance with a non-restrictive illustrative embodiment of the present invention;

Figure 11 is a schematic theoretical representation of a binarized image obtained for a clear border;

Figures 12A, 12B, 12C and 12D are schematic theoretical representations of line black density histograms for the top, bottom, left and right borders, respectively, of a theoretical binarized image obtained for a clear border;

Figures 13A, 13B, 13C and 13D shows four of the same binarized image obtained for a clear border with the border positions thereof being identified;

Figure 14 shows the binarized image of Figures 13A-13D with the found border contour;

Figure 15 is a schematic representation of another binarized image obtained for clear characters from the same grayscale image as the binarized image in Figures 13A-13D with the contour shown in Figure 14 being mapped out thereon;

Figure 16 is binarized image of Figure 15 with the border contour and border area having been removed;

Figures 17A, 17B and 17C are the examples of grayscale images and their corresponding binarized images shown in Figures 6A, 6B and 6C respectively with additional corresponding binarized images having had their black borders removed;

Figures 18 is an example of the grayscale image of Figure 7 and its corresponding binarized image having been obtained with dynamic sub-image division for clear characters as well as its corresponding binarized image of Figure 8 having been obtained for clear borders with an additional binarized image having had the black borders removed;

Figure 19 is an example of the grayscale image of Figure 9 and its corresponding binarized image having been obtained with dynamic sub-image division for clear characters as well as its corresponding binarized image having been obtained for clear borders with an additional binarized image having had the black borders removed;

Figure 20A is an example of a grayscale image;

Figures 20B, 20C and 20D are respective binarized images of the grayscale image of Figure 20A having been obtained with different sub-image sizes

Figures 21A and 21A are a grayscale image and its corresponding binarized image respectively, having been obtained with dynamic sub-image division in accordance with a non-restrictive illustrative embodiment of the present invention;

Figures 22A and 22A are a grayscale image and its corresponding binarized image respectively, having been obtained with dynamic sub-image division in accordance with a non-restrictive illustrative embodiment of the present invention;

Figures 23A and 23A are a grayscale image and its corresponding binarized image respectively, having been obtained with dynamic sub-image division in accordance with a non-restrictive illustrative embodiment of the present invention;

Figure 24 are two examples of a grayscale image with characters that are very small and with a very small contrast of foreground and background as well as their respective resulting binarized images; and

Figure 25 is an example of a grayscale image and two corresponding binarized images having been obtained using different sub-image sizes.

## DETAILED DESCRIPTION OF ILLUSTRATIVE EMBODIMENTS

Generally stated, in an embodiment of the invention, an image binarization method is provided for converting a grayscale photograph or video image into a black and white binary image that provides sufficient detail.

This method divides the original image into sub-images. Instead of simply statically dividing a grayscale image into a predetermined set of sub-images, a given sub-image is dynamically created from pixel to pixel. More specifically, each sub-image is a window that contains a central first pixel as well as neighboring pixels. The next sub-image will contain a central second pixel, adjacent to the first pixel as well as neighboring pixels and so on. The color density of the neighboring pixels is averaged and the threshold (i.e. the local contrast) between the central pixel and its neighboring pixels is calculated. A certain predetermined percentage of local contrast is used to calculate whether or not the central pixel is below or above the threshold. Therefore, at a certain color value, the pixel is converted to white and at another color value the pixel is converted black. The foregoing is effectuated pixel by pixel in a dynamic fashion evaluating each pixel relative to its neighboring pixels in order to produce a binarized image.

By using these dynamic sub-image divisions which move from one pixel to another rather than being preset, a more detailed black and white image is provided. In essence, local contrast is calculated rather than general contrast which gives a much clearer and much more precise image and would provides for a smooth threshold transition of the pixels across the border between two sub-images. The amount of neighboring pixels in a given sub-image is also predetermined. A small sub-image provides greater clarity whereas a large sub-image gives a better broad view. For example, in car plates, the small sub-image is used for reading the license number, whereas for the border a larger sub-image is used. The two binary images are combined to give a full view of the border with the plate numbers therein.

With reference to the appended drawings, a non-restrictive illustrative embodiment of the present invention will now be described herein so as to exemplify the invention and not limit the scope thereof.

1- Binarization with Dynamic Sub-images

Since certain grayscale images such as car plates for example cannot be taken under the same luminance at surveillance sites, tools are required to treat these images in order to provide adequate binary images which will allow to clearly view important information such as a license plate number for example. In an illustrative embodiment, the present invention provides an algorithm for binarization with dynamic sub-images. The foregoing, in one example provides to binarize images for OCR.

1.1 Scheme of the algorithm

The algorithm of the present invention provides for calculating a threshold for each pixel in its own sub-image. For a given pixel $P$, its sub-image $SubI_P$ is a rectangular portion or window of the original grayscale image. The position of $P$ is at the center of its sub-image $SubI_P$. The size of sub-image $SubI_P$ should be small enough so that the sub-image can be considered as with even luminance on it and should also be enough large to contain enough information.

Figure 4 shows an example of two pixels $P_1$ and $P_2$ of a grayscale image and their sub-images $SubI_{P1}$ $SubI_{P2}$. respectively. As shown, each pixel $P_1$ and $P_2$ is positioned at the centre of its respective sub-image $SubI_{P1}$ $SubI_{P2}$.

For the sub-image $SubI_P$ of a given pixel $P$, the color value of each pixel within the sub-image $SubI_P$ is determined and the average color value is calculated for all pixels within this sub-image $SubI_P$. The threshold of pixel $P$ is a predetermined percentage of this average color value. Therefore during binarization, $P$ is converted to white if its color value is larger than its threshold, and black if its color value is smaller than its threshold.

In this binarization scheme, certain important factors are the size of the sub-image for each pixel and the threshold coefficient (e.g. the percentage) used for calculating the threshold from the average color value in the sub-image.

1.2 The algorithm

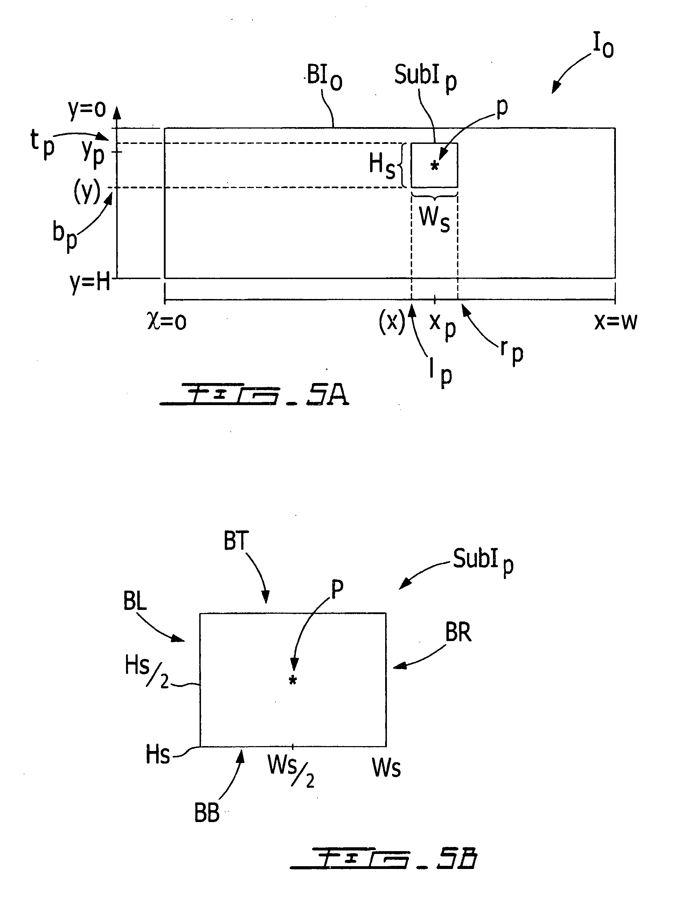

With reference to Figures 5A and 5B, grayscale image Io, that is to be binarized, has a width $W$ and a height $H$. A fixed rectangle size for the sub-images $SubI_P$, of all the pixels of the image Io is predetermined. In essence a fixed number of pixels along $W$ of Io will be chosen to provide the width $Ws$ of a sub-image $SubI_P$, and a fixed number of pixels along $H$ of Io will be chosen to provide the height $Hs$ of the sub-image $SubI_P$ (where $0 < Ws \leq W$ and $0 < Hs \leq H$), and $C$ is a threshold coefficient used to calculate the threshold from the average color value. $C$ is a predetermined coefficient (such as a percentage of contrast).

A given pixel $P$ is positioned at $(x_P, y_P)$ and has a color value $V_P$ that is determined. More specifically, $x_P$ is the position of $P$ along $W$ of Io and $y_P$ is the position of $P$ along the height $H$ of the image Io. The coordinates of the sub-image $SubI_P$ of pixel $P$ are $(l_P, t_P, r_P, b_P)$. More specifically, $l_P$ is the position of the left border of sub-image $SubI_P$, along the width $W$ of the image Io, $t_P$ is the position of top border of sub-image $SubI_P$ along the height $H$ of the image Io, $r_P$ is the position of the right border of sub-image $SubI_P$ along the width $W$ of the image Io, and $b_P$ is the position of the bottom side of sub-image $SubI_P$ along the height $H$ of the image Io.

The algorithm is described as follows:

Step 1: calculate the coordinates of $SubI_P$ :

$$l_P = \begin{cases} 0, & \text{if} \quad 0 \leq x_P < Ws/2; \\ x_P - Ws/2, & \text{if} \quad Ws/2 \leq x_P < W - Ws/2; \\ W - Ws/2, & \text{if} \quad W - Ws/2 \leq x_P < W; \end{cases}$$

$$t_P = \begin{cases} 0, & \text{if} \quad 0 \leq y_P < Hs/2; \\ y_P - Hs/2, & \text{if} \quad Hs/2 \leq y_P < H - Hs/2; \\ H - Hs/2, & \text{if} \quad H - Hs/2 \leq y_P < H; \end{cases}$$

$$r_P = \begin{cases} Ws, & \text{if} & 0 \le x_P < Ws/2; \\ x_P + Ws/2, & \text{if} & Ws/2 \le x_P < W - Ws/2; \\ W, & \text{if } W - Ws/2 \le x_P < W; \end{cases}$$

$$b_P = \begin{cases} Hs, & \text{if} & 0 \le y_P < Hs/2; \\ y_P + Hs/2, & \text{if} & Hs/2 \le y_P < H - Hs/2; \\ H, & \text{if } H - Hs/2 \le y_P < H. \end{cases}$$

Step 2: calculate, the average of the color value $A_p$ of all pixels in $SubI_P$.

$A_p$ = sum of the color value of each pixel in $SubI_P$ / number of pixels in $SubI_P$.

Step 3: calculate the threshold $T_P$ of $P$ : $T_P$ = C × $A_p$.

Step 4: binarize pixel $P$ :

$$P \text{ is } \begin{cases} \text{black,} & \text{if } V_P \le T_P; \\ \text{white,} & \text{if } V_P > T_P. \end{cases}$$

Each of these four steps is repeated on the image Io pixel by pixel until all pixels have been converted to either black and white thereby providing a binarized image.

$P$ should be at the centre of $SubI_P$ where $Ws/2$ and $Hs/2$ correspond.

Therefore, it should be noted that when calculating coordinates of a sub-image $SubI_P$ in Step 1, for a given pixel $P$, if the distance from the position ($x_P$, $y_P$) of $P$ to the borders $BL$, $BR$, $BT$ and $BB$ of the image Io is less than ½ of the width Ws or height $Hs$ of the sub-image $SubI_P$, then the center of this sub-image $SubI_P$ does not correspond to the position of $P$. In this case, we align the border of the sub-image $SubI_P$ of P to the border $BIo$ of the image $Io$.

1. 3 Example

What follows are a few results exemplifying the above discussed algorithm for Binarization with Dynamic Sub-images.

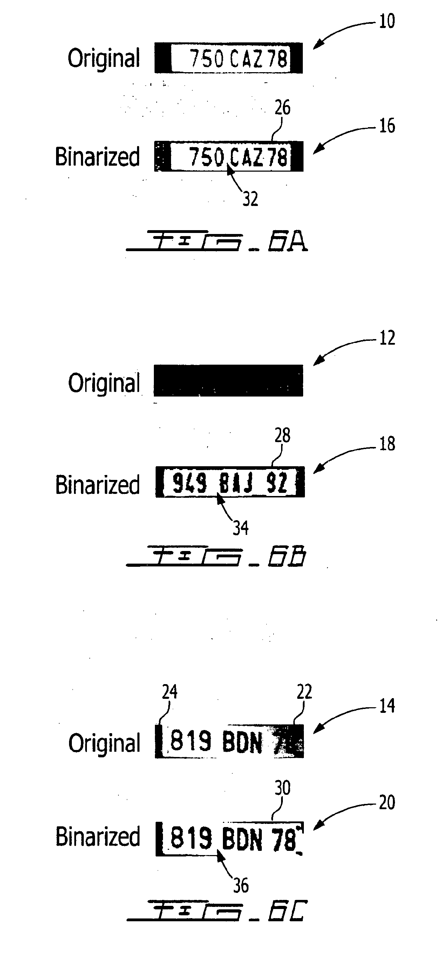

Figures 6A, 6B and 6C respectively show three car plate original grayscale images 10, 12 and 14 and their corresponding binarized images 16, 18, and 20 respectively.

Images 10, 12 and 14 were taken under very different luminance conditions. Image 10 was lit evenly, Image 12 received light that was weaker than image 10 and uneven. Image 14 received even less light. In image 12, the background is supposed to be white, but looks almost as dark as the foreground of image 10. As for image 14 which received uneven luminance, the background near its right end 22 looks almost as dark as the foreground in its left end 24.

However, when the three images 10, 12 and 14 were binarized in accordance with the present invention the characters in all three binarized images 16, 18 and 20 are clear enough for OCR.

2 - The parameters for binarization

As mentioned above, the factors in the algorithm of the present invention include the size of the sub-image and the threshold coefficient used for calculating the threshold from the average color value in the sub-image.

With respect to recognizing characters in a grayscale image, in one non-limiting example, it was found that a binarization result of satisfactory quality is achieved when choosing a width and height for the sub-image that is 1.5 times the width of these characters. Such a sub-image size provides for the present algorithm to produce clear good characters in the binarized images for OCR to recognize. In one example, the width of most of the characters was about 12 pixels. As such a character width of 12 pixels was set and therefore the sub-image was set with a height and width of 18 pixels (1.5 times of the character width), therefore the sub-image contains 324 pixels.

However, the binarization result is not overly sensitive to the sub-image size. For example, the width of the characters in the three images 10, 12 and 16 shown in Figure 6 is not exactly 12 pixels, but nevertheless all the characters in the three binarized images 16, 18 and 20 are clear.

In the examples of Figures 6A, 6B and 6C, 0.85 was chosen the threshold coefficient. The binarization result is more sensitive to the threshold coefficient than to the sub-image size.

3- Algorithms for border removal

In Figures 6A, 6B and 6C, all three binarized images 14, 16 and 18 have a black border 26, 28 and 30 respectively surrounding their plate images 32, 34 and 36 respectively. For OCR, this is not desirable. Segmentation cannot work properly with such a border and as such it must be removed from the binarized car plate images before passing them to OCR. The algorithm for border removal will now be described in accordance with a non-restrictive illustrative embodiment of the present invention.

3.1 Clear characters and clear border

In order to remove the black border surrounding the characters in binarized images such as car plate images, or sign images and the like, the shape of the border has to be determined.

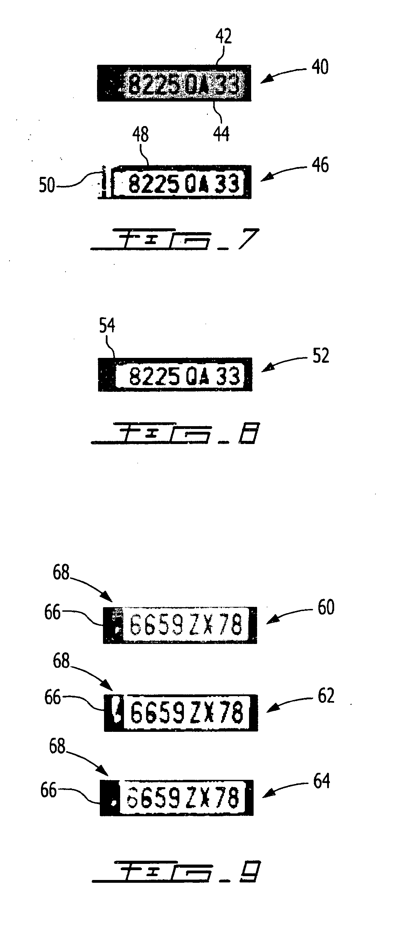

Turning to Figure 7, the original grayscale image 40 shows a clear border 42 surrounding the plate image 44, but in the corresponding binarized image 46, the border 48 was broken into pieces at the left portion 50 of the image 46. This type of binarized image is not optimal for border removal. Therefore, we must temporally set aside our aim in pursuit of clear characters in the binarized image, to instead focus on capturing a satisfactory clear border shape.

It was mentioned above that the result of binarization is not very sensitive to the sub-image size; nevertheless, changing the size of the sub-image does affect the result. Therefore, it is advantageous to provide a larger sub-image size when binairizing the border than the sub-image size provided when binarizing the characters. For example, in Figure 7 the sub-image size (height and width) was 1.5 times the character width which was set at 12 pixels, providing a sub-image size of 18-by-18 pixels. This sub-image size though did not provide a satisfactory border. Therefore, to properly binarize the border 42 of the grayscale image 40 of Figure 7, a sub-image size having a width and height that was 2.5 times the character width (12 pixels) was set thereby providing a sub-image size of 30-by-30 pixels.

Figure 8 shows the resulting binarized image 52 having a clear border 54. Based on such a binarized image, we detect the border in image 46 of Figure 7, When comparing the binarized image 52 of Figure 8 with the binarized image 46 of Figure 7, it is ascertained that in this non-limiting example it was advantageous to binarize the grayscale plate image 30 using a sub-image size of 2.5 times the plate character width (about 12 pixels) thus providing both clear characters and a clear border.

Unfortunately, the results achieved in Figure 8 are exceptional and most times a larger sub-image will provide a clear border but not clear characters and a smaller sub-mage will provide clear characters but not a clear border.

Therefore, in an non-restrictive illustrative embodiment of the present invention, a given grayscale image of a car plate or a like sign is binarized twice using two differently sized sub-images to move from pixel to pixel during the binarization step, namely a larger sub-image size and a smaller sub-image size. The binarized image produced with the larger sub-image provides for detecting the border. The binarized image produced with the smaller sub-image provides clear characters. Since the border has been detected, and more specifically, the position of the pixels that make up this border is known, this border (i.e. the pixels) can be mapped and then removed from the binarized image that provides clearer characters. Then, the two binary images are subsequently cropped to provide a complete single binary image having both a clear border and clear characters.

This is exemplified in Figure 9 which shows a grayscale image 60, a first binarized image 62 and a second binarized image 64. Image 62 was obtained by binarizing the pixels of image 60 using a sub-image size of 1.5 times the character width (herein 1.5X). Image 64 was obtained by binarizing the pixels of image 60 using a sub-image size of 2.5 times the character width (herein 2.5X). Keeping in mind the character "6" and the border section 66 at the left position 68 of each of the images 60, 62 and 64, it is noted that using a sub-image size of 1.5X provides for clearer characters (as shown in image 62), whereas using a larger sub-image size (2.5X) provides for a clearer border (as shown in image 64).

Therefore image 62 (clear characters) and image 64 (clear border) should be combined to provide a complete image having both clear characters and a clear border.

3.2 - Scheme for border removal

The algorithm for border removal comprises two binarization steps, one step for achieving clear characters (*binarized image for clear characters*) using a certain sub-image size and the other step for achieving a clear border (*binarized image for clear border*) using a sub-image size that is greater than the previously mentioned certain sub-image size. After producing these two binarized images, the algorithm finds the border contour on the binarized image for clear border, maps the contour on the binarized image for clear characters, and then removes the border from the binarized image for clear characters. This produces a binarized image for clear characters without a border.

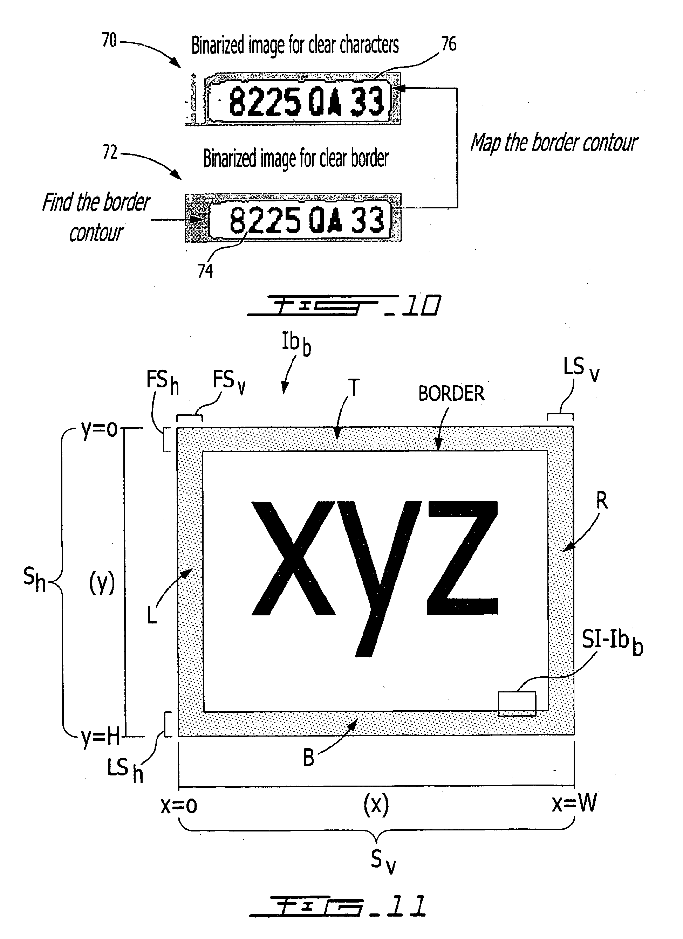

Figure 10 shows two binarized images 70 and 72 which were produced from the original grayscale image 40 shown in Figure 7. The binarized image 72 was produced using a larger sub-image size for each pixel than the one used for the binarized image 70. As such, binarized image 70 is for clear characters and binarized image 72 is for a clear border. The border contour 74 is therefore detected on image 72. The detected border contour 74 is then mapped on image 70 thereby providing a mapped contour 76. The mapped contour 76 in the binarized image 70 is removed. The image 70 without border is then cropped with the image 72 to provide an image having clear characters (that were obtained in image 70) and a clear border (that was obtained in image 72.

### 3.3 - The Algorithm

Border removal consists of two algorithms: the algorithm for border contour finding and (b) the algorithm for border white painting. These two algorithms will now be discussed.

Figure 11 is a schematic representation of a binarized image ($Ib_b$) which is used only for explanatory reasons regarding finding the border contour.

### 3.3.1 - The algorithm for border contour finding

Let $W$ and $H$ be the width and height of the image. Furthermore, $S_h$ and $S_v$ indicate, respectively, the number of horizontal lines and the number of the vertical columns to be scanned. $C_h$ and $C_v$ indicate, respectively, the horizontal and vertical border density coefficients.

The following steps are performed *on the binarized image for clear border*.

Step 1 - <u>Binarized image for clear border</u>: produce a binarized image for a clear border ($Ib_b$) from the original grayscale image (Io) using a pre-determined sub-image size ($SI$-$Ib_b$). In one non-limiting example, the sub-image size is 2.5 times the width of a given character XYZ in the original grayscale image (Io). A copy of this binarized image ($Ib_b$) is kept.

Step 2- <u>Border scanning</u>: in the binarized image for clear border ($Ib_b$), scan the first $S_h$ pixel lines (F$S_h$) and the last $S_h$ pixel lines (L$S_h$) to yield histograms of line black density for both the top border T and bottom border B; and scan the first $S_v$ pixel columns (F$S_v$) and the last $S_v$ pixel columns (F$S_v$) to yield histograms of column black density for both left border L and right border R.

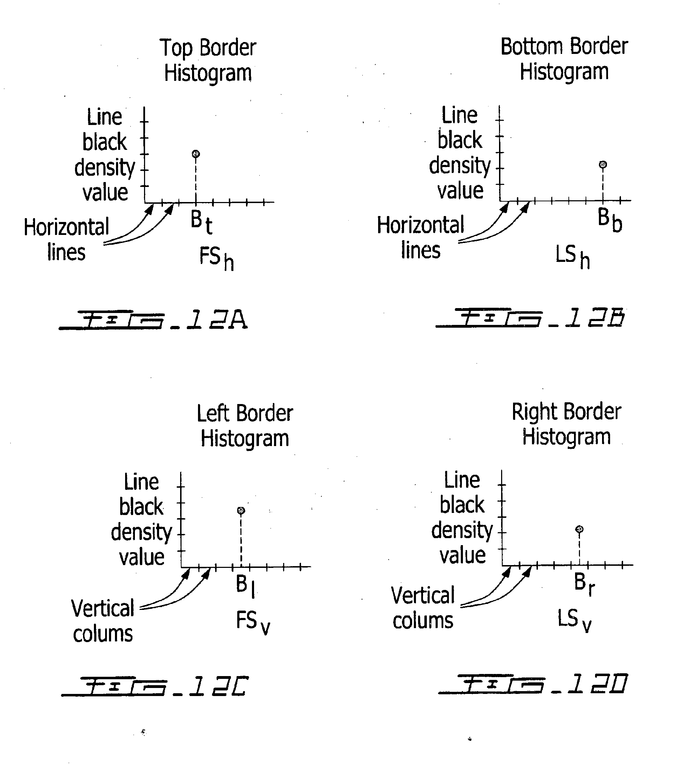

With reference to Figures 12A, 12B, 12C and 12D, histograms are provided for each of the top, bottom, left and right borders. The top border and bottom borders include respective first and last pixel lines FS$_h$ and LS$_h$ respectively. The left and right borders include respective first and last pixel columns FS$_v$ and LS$_v$ respectively. We will keep the foregoing histograms in mind as we describe step 3.

Step 3 - <u>Border position</u>:

(i) The top border T is scanned from its top most pixel line toward its bottom most pixel line in order to identify the first pixel line that has a line black density value that is less than $W \times C_h$. Once we identify this value we determine its line number as $B_t$ and stop.

(ii) The bottom border B is scanned from its bottom most pixel line toward its top most pixel line in order to identify the first pixel line that has a line black density value that is less than $W \times C_h$. Once we identify this value we stop determine its line number as $B_b$ and stop.

(iii) The left border L is scanned from its left most pixel line toward its right most pixel line in order to identify which pixel line that has a line black density value that is less than $H \times C_v$. Once we identify this value we determine its line number as $B_l$ and stop.

(iv) The right border L is scanned from its right most pixel line toward its left most pixel line in order to identify the first pixel line that has a line black density value that is less than $H \times C_v$. Once we identify this value we determine its line number as $B_r$ and stop.

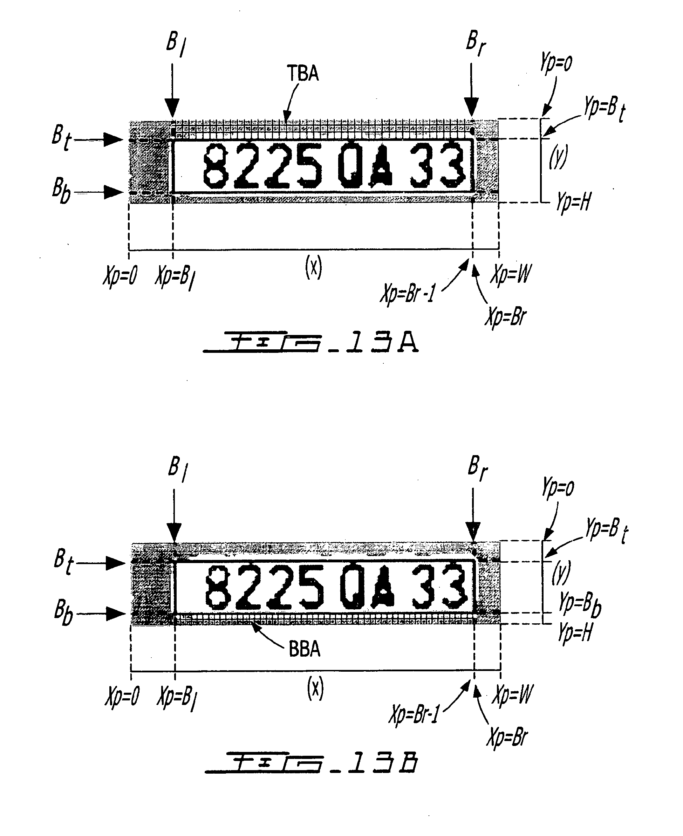

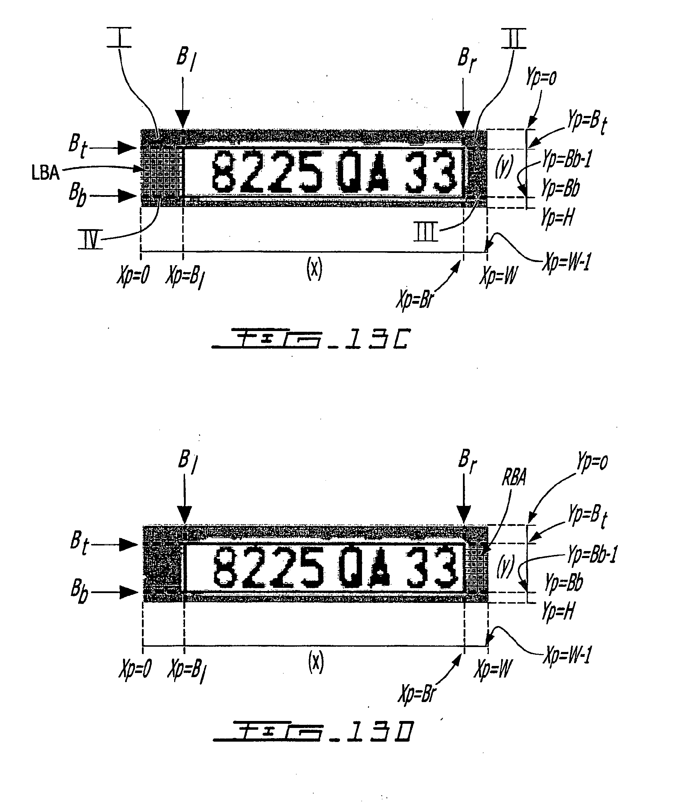

Figures 13A, 13B, 13C and 13D show the border position of each line number $B_t$, $B_b$, $B_l$, $B_r$.

<u>4- Border contour</u>:

After having identified the border position line number, as we can see from Figures 13A-13D these positions do not exactly represent the contour of the border which is not in a straight line but in a curved line about the characters. Therefore, with particular reference to Figures 13A-13D, we need to identify the contour of each border side, namely the top border, the bottom border, the left border and the right border.

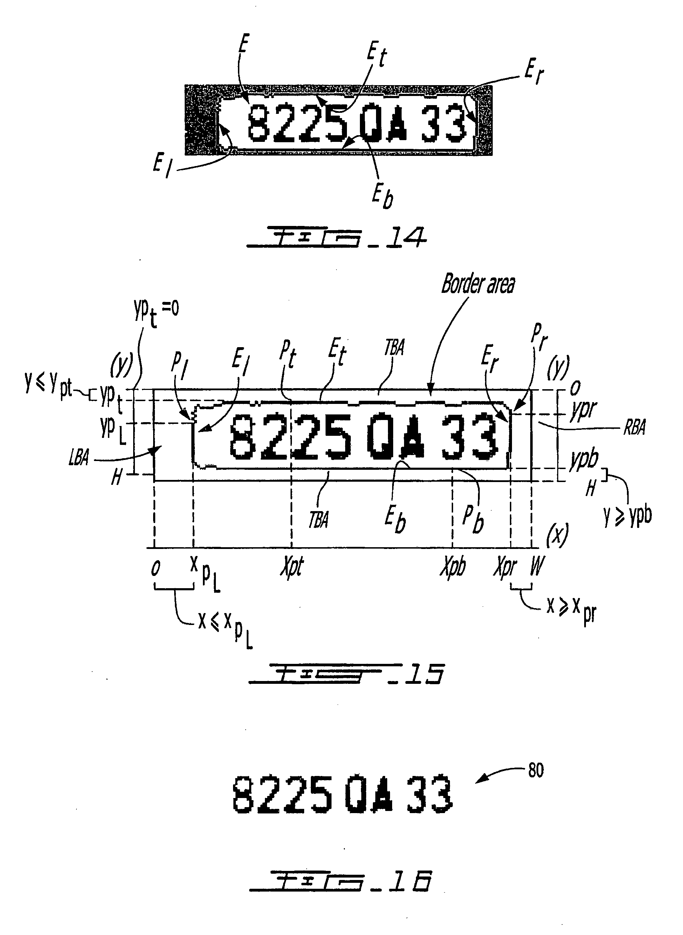

<u>The top border contour</u>: With reference to Figure 12A, we scan every vertical pixel column from the column position $x_p = B_l$ to $x_p = B_r$ - 1 within the top border area (TBA) defined from the position $y_p = B_t$ to $y_p = 0$, on each pixel column, we check each pixel position ($x_p$, $y_p$) until we identify a first black pixel, once we identify this first black pixel, we stop and move onto the next column and so one until we have identified a series of these black pixels which allows us to map out top border contour $E_t$ as shown in Figure 14.

<u>The bottom border contour</u>: With reference to Figure 12B, we scan every vertical pixel column from the column position $x_p = B_l$ to $x_p = B_r$ - 1 within the bottom border area (BBA) defined from the position $y_p = B_b$ to $y_p = H$ - 1, on each pixel column, we check each pixel position ($x_p$ , $y_p$) until we identify a first black pixel, once we identify this first black pixel, we stop and move onto the next column and so one until we have identified a series of these black pixesl which allows us to map out the bottom border contour $E_b$ as shown in Figure 14.

<u>The left border contour</u>: With reference to Figure 12C, we scan every vertical pixel line from the line position $y_p = B_t$ to $y_p = B_b$ - 1 within the left border area (LBA) defined from the position $x_p = B_l$ to $x_p = 0$, on each pixel line, we check each pixel position ($x_p$ , $y_p$) until we identify a first black pixel, once we identify this first black pixel, we stop and move onto the next line and so one until we have identified a series of these black pixesl which allows us to map out the left border contour $E_l$, as shown in Figure 14.

<u>The right border contour</u>: With reference to Figure 12D, we scan every vertical pixel line from the line position $y_p = B_t$ to $y_p = B_b$ - 1 within the right border area defined from the position $x_p = B_r$ to $x_p = W$ - 1, on each pixel line, we check each pixel position ($x_p$ , $y_p$) until we identify a first black pixel, once we identify this first black pixel, we stop and move onto the next line and so one until we have identified a series of these black pixesl which allows us to map out the left border contour as shown in Figure 14.

The four steps described above provide to identify the border contour E as shown in Figure 14. The border contour consists of four sequences of pixel positions, they are top border contour, bottom border contour, left border contour and right border contour, $E_t$ , $E_b$ , $E_l$ , and $E_r$ respectively. The position coordinates kept in $E_t$ , $E_b$ , $E_l$ , and $E_r$ draw a curve E.

### 3.3.1 The algorithm for border white painting

Once the border contour is found, the four borders are painted white (i.e. removed).

More specifically, the border contour E that was found on the binarized image for clear border (e. g. image 72 in Figure 10) is mapped out on the binarized image obtained for clear characters (e. g. image 70 in Figure 10) since we have identified the coordinates of each of the pixels of $E_t$ , $E_b$ , $E_l$ , and $E_r$ we can not find these pixels on the image obtained for clear characters and paint them white. Of course its not only the pixels of $E_t$ , $E_b$ , $E_l$ , and $E_r$ that need to be painted white its all the pixels behind the contour (the border area see Figure 15). Therefore border painting is performed on the image obtained for clear characters.

All the actions described below are performed in the *binarized image for clear characters*

With reference to Figure 15, the algorithm for border painting is described as follows:

1. <u>The top border area (TBA)</u> : $P_t$ ($x_{pt}$ , $y_{pt}$) is a given pixel in the top border contour line $E_t$ , pixel $P_t$, as well as all pixels that are on the same column and above $P_t$, (pixels $p(x, y)$ that satisfy $x = x_{pt}$ and $y \leq y_{pt}$) are painted white.

2, <u>The bottom border area (BBA)</u>: $P_b$ ($x_{pb}$ , $y_{pb}$) is a given pixel in the bottom border contour line $E_b$ , pixel $P_b$, as well as all pixels that are on the same column and below $P_b$, (pixels $p(x, y)$ that satisfy $x = x_{pb}$ and $y \geq y_{pb}$) are painted white.

3. <u>The left border area (LBA)</u>: $P_l(x_{pl}$ , $y_{pl})$ is a given pixel in the left border contour line $E_l$, pixel $P_l$, as well all pixels that are on the same line and left of $P_l$, (pixels $p(x, y)$ that satisfy $x \leq x_{pl}$ and $y = y_{pl}$) are painted white.

4. <u>The right border area (RBA)</u>: $P_r(x_{pr}$ , $y_{pr})$ is a given pixel in the right border contour line $E_r$ , pixel $P_r$, as well as all pixels that are on the same line and left of $P_r$, (pixels $p(x, y)$ that satisfy $x \geq x_{pr}$ and $y = y_p$ $x \leq x_{pl}$ and $y = y_{pl}$) are painted white.

With reference to Figure 13C. the remaining four corners I, II, III and IV are then painted white.

With reference to Figure 16, the foregoing provides a borderless binarized image 80 with clear characters that is cropped with a binarized image having a clear border (e.g. 72 in Figure 10) to produce an image with both clear characters and a clear border.

### **Examples**

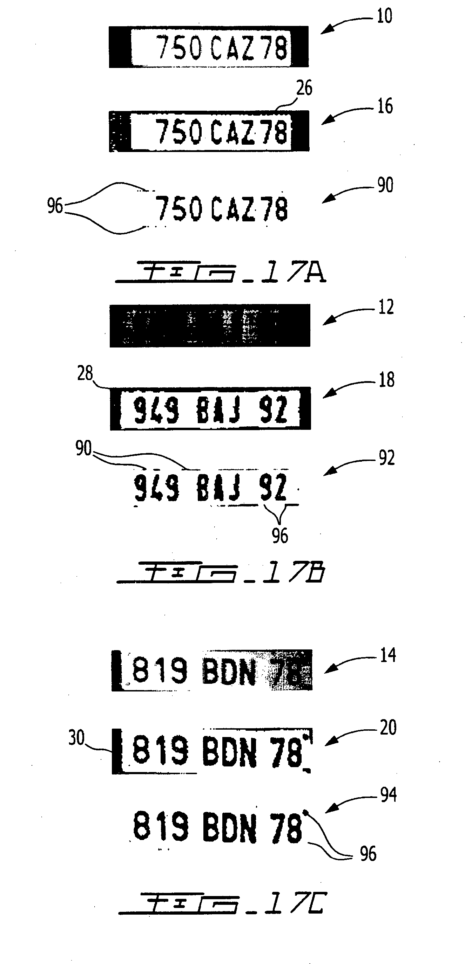

Figures 17A, 17B and 17C show the original grayscale images 10, 12 and 14, respectively and their binarized images 16, 18 and 20 obtained for clear characters previously discussed in Figures 6A-6B. Figures 17A, 17B and 17C show that the corresponding black borders 26, 28 and 30 can be removed from the images 16, 18 and 20 to provide corresponding images 90, 92 and 94, respectively without borders.

Figures 17A-17C show that the borders 26, 28 and 30 were well removed for the three car plate images. There are some dirt dots 96 on the border removed images 90, 92 and 94, which is due to the use two binarized images as previously explained. This "dirt" is just the little difference between the two binarized image versions..

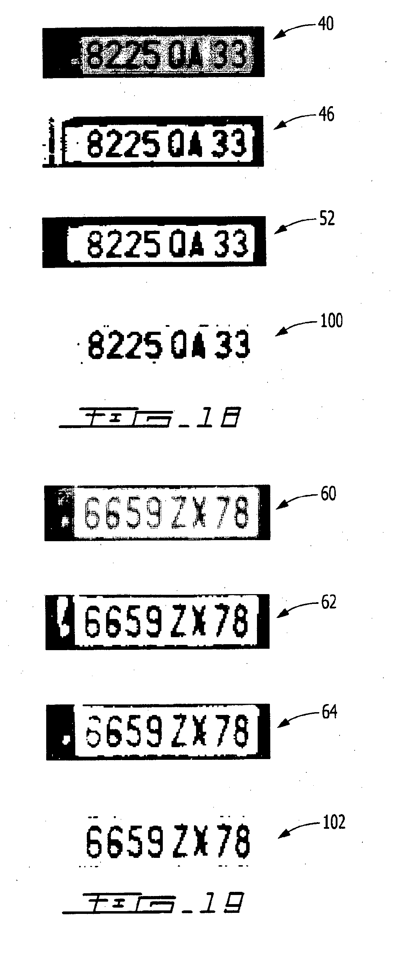

Figures 18 and 19 show the original grayscale images 40 and 60 respectively as well as their corresponding binarize mages for clear characters 46 and 62, respectively, and their corresponding binarized images for a clear borders 52 and 64 respectively all of which were previously discussed herein with reference to Figures 7, 8 and 9. Figures 18 and 19 now show that the borders of images 46 and 62 can be removed to produce images 100 and 102 respectively which have clear characters but no borders and which can be cropped with images 52 and 64 to produce images with both clear borders and clear characters.

### 3.4 The parameters for border removal

To remove the black border in car plate images, the key procedure is to find the border contour. In the algorithm for border contour finding, we need four parameters: $S_h$, $S_v$, $C_h$ and $C_v$.

$S_h$ is the number of scanning lines for getting the black density histogram for the top and bottom border, and $S_v$ is the number of scanning columns for getting the black density histogram for the left and right border. In one aspect, 1/3 of the image height ($H$) for $S_h$ and 1/3 of the image width ($W$) for $S_v$ are set. In another aspect, $S_h$ is 1/2 of the image height ($H$) and $S_v$ is 1/2 of the image width ($W$).

$C_h$ and $C_v$ are constants in the algorithm. They are used to precisely locate all four borders as described in Step 3 of the algorithm for border contour finding. In one aspect, $C_h$ = 35% and $C_v$ = 45%.

For example, for top border, we scan the pixel lines, from the line 0 going down line by line, when we meet the first line (indicating Nt as its line number) which has a black density smaller than 35% of the image width (W), that means the top border consists of the pixel lines with their line number between 0 to N - 1. For the bottom border we scan the pixel lines, from the line H going up line by line, when we meet the first line (Nb) which has a black density smaller than 35% of the image width (W), that means the bottom border consists of the pixel lines with their line number between H to N - 1. For the left border we scan the pixel columns, from the column 0 going right column by collumn, when we meet the first column (NI) which has a black density smaller than 45% of the image height (H), that means the left border consists of the pixel columns with their column number between 0 to NI - 1. For the right border we scan the pixel columns, from the column W going left line by line, when we meet the first column (Nr) which has a black density smaller than 45% of the image height (H), that means the right border consists of the pixel columns with their column number between W to Nr - 1.

### 4.- Notes on the algorithm for binarization

### 4.1 -Binarizing a general grayscale image

In the examples so fat, we have seen the results of the binarization algorithm on car plate images. Of course, the method disclosed herein is also useful on other grayscale images.

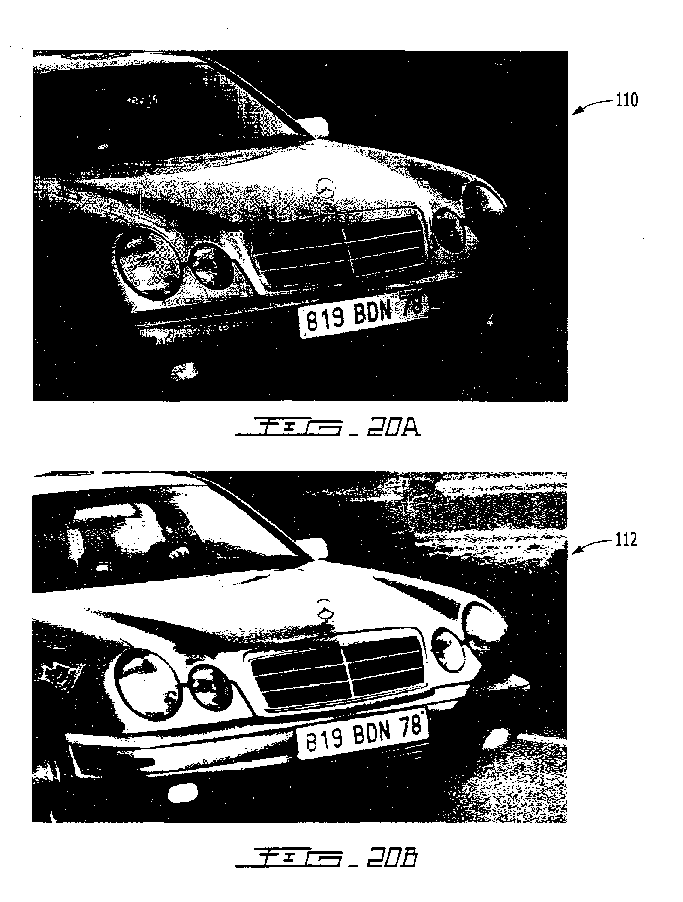

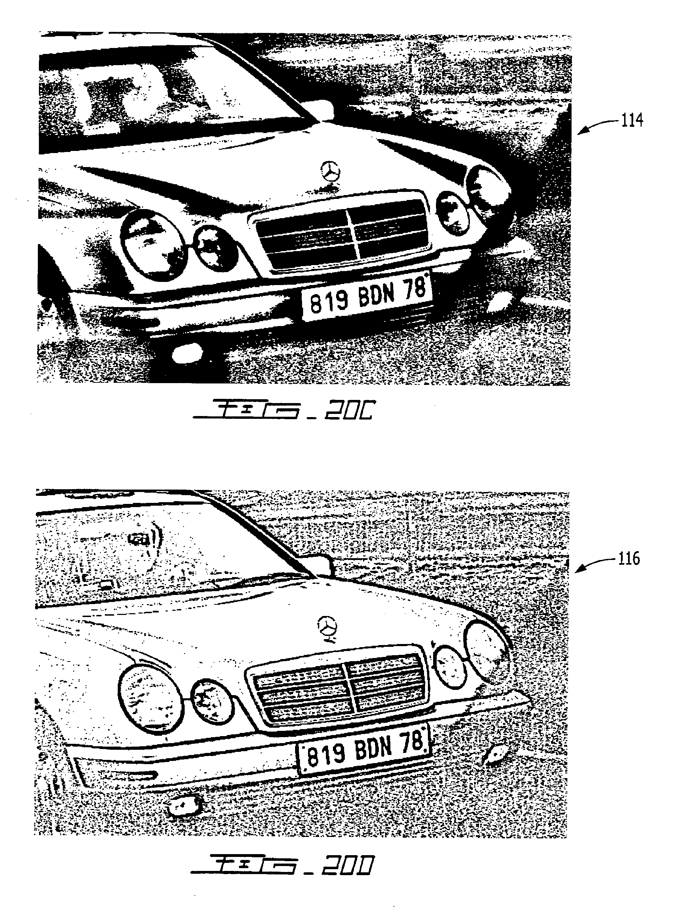

Figure 20A shows an original gray scale image 110 having a width of 702 pixels and a height of 479 pixels. Figure 20B is a first binarized image 112 of image 110 which was obtained using dynamic sub-image division with a sub-image having a size that was 1/4 the image width (175 pixels) and 1/4 the image height (118 pixels). Figure 20C shows a second binarized image 114 of image 110 which was obtained using dynamic sub-image division with a sub-image having a size that was 1/8 the image width (87 pixels) and 1/4 the image height (59 pixels). Figure 20D shows a third binarized image 116 of image 110 which was obtained using dynamic sub-image division with a sub-image having a size of 10X10 pixels. Therefore, using smaller sub-images provides for more details. This is especially useful for images that were captured in the dark as is often the case with surveillance cameras.

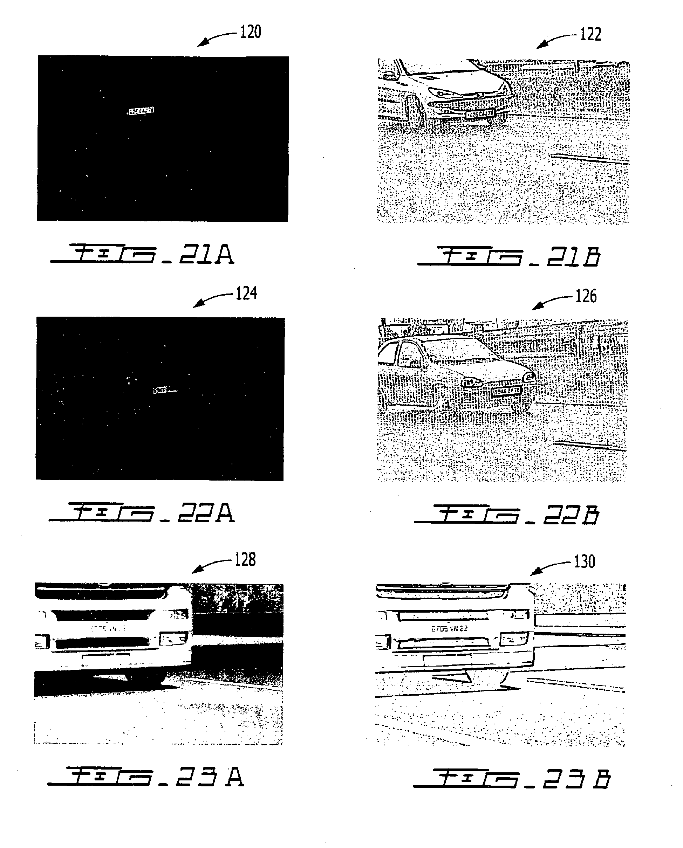

More examples are shown in Figures 21A to 23B.

Figure 21A shows an original grayscale image 120 having an image width of 702 pixels and an image height of 479 pixels. As is shown, image 120 is black and all that can be seen is the car plate. When binarizing image 120 with a dynamic sub image division using a sub-image size of 10X10 pixies, we obtain the binarized image 122 shown in Figure 21B.

Figures 22A and 23A are also grayscale images 124 and 126 respectively having an image width of 702 pixels and an image height of 479 pixels, their corresponding binarized images, 128 and 130, respectively shown in Figures 22B and 23B were obtained with sub-image sizes of 10X10 pixels.

### 4.2 About small size characters

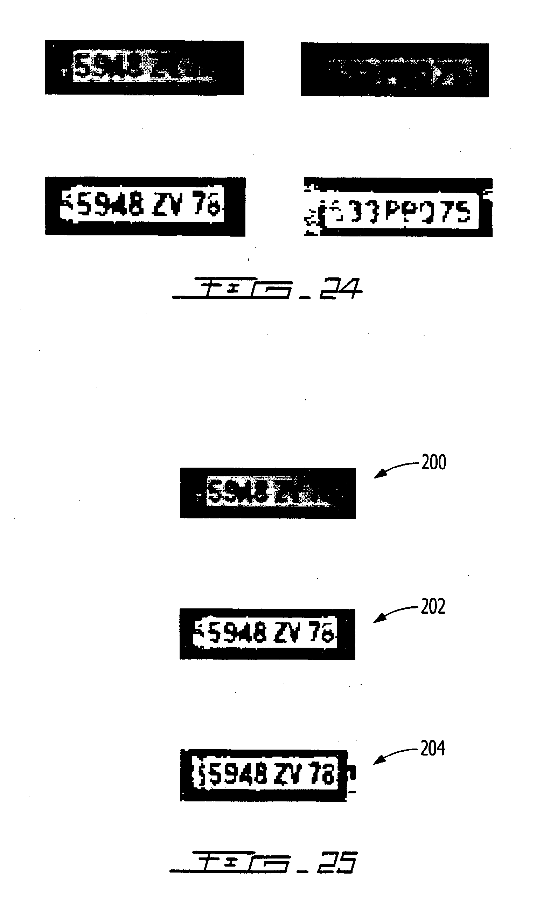

To get good characters quality for OCR, the size of characters in the image to be binarized should not be too small. If the size of the characters on a car plate, for example, is too small and the contrast of foreground and background is also too small, the result of binarization may not be good as shown in the examples of Figure 24.

4.3 About the sub-image size

Generally, the result of binartization is not very sensitive to the sub-image size. However, when character size is small, the result becomes more sensitive to the sub-image size,

As was previously discussed, the width of the characters in most of car plate images is about 12 pixels, the sub-image width we set, in accordance with an illustrative embodiment was 18 pixels (1.5 times of the character width).

Turning to Figure 25, a car plate grayscale image 200 is shown, having a character width of 7 pixels. A sub-image size of 1.5 times the character width was used (10.5X10.5 pixels) which resulted in a binarized image 202. Another binarized image 204 was produced using a sub-image size of 10X10 pixels. This second image 204 was superior to image 202.

4.4 Sub-image size

It was discussed herein how the binarization results depend on the sub-image size. To get better binarization results for car plates, it is better to set the sub-image size dynamically for each plate. That is if we can get the character width before setting the sub-image size, we will get better binarized image for each plate.

It is possible to estimate the character width for getting better binarized image with the binarization algorithm provided herein.

4.5 Time

The amount of time for binarizing an image is dependent on the sub-image size, the larger the size is the more time the binarization consumes. In one example, it takes almost 1 second when binarizing a whole car image with a sub-image width and height of 10 pixels, It is possible to improve binarization time consuming by finding an optimal sub-image size with the aid of the algorithm provided herein..

Conclusions

The algorithms herein are easy to implement, and the results are good enough for OCR to recognize the characters in a an image.

To get good binarized image results, the sub-image size and the threshold coefficient are important parameters. The threshold coefficient is used to calculate the threshold for each pixel from the average color value in a sub-image.

The binarization result is not very sensitive on the sub-image size, but the sub-image size does affect the binarization result when the characters in the images are too small. It also affects the result on big black masses. For big black masses, the result will be better if the sub-image size is not smaller than the masses size.

The algorithm for border removal showed good results in the border removed binarized images. The algorithm also needs the width of the characters in the image to be binarized.

Since the size of certain similar images, such as car plate images varies by the same token the characters or other information width also varies in these images, hence, a preset sub-image size cannot give a good character shape for all images. Dynamically determining the sub-image size for each image to be binarized will well solve this problem.

In accordance with an illustrative embodiment of the present invention, there is also provided a device for performing the methods disclosed herein. This device can include a controller for performing steps of the methods disclosed herein as well as a scanner and an interface for displaying results and/or a printer. For example, the controller can be a data processor such as a computer, the interface can be a screen.

It should be noted that the various components and features of the examples described above can be combined in a variety of ways.

It is to be understood that the invention is not limited in its application to the details of construction and parts illustrated in the accompanying drawings and described hereinabove. The invention is capable of other embodiments and of being practiced in various ways. It is also to be understood that the phraseology or terminology used herein is for the purpose of description and not limitation. Hence, although the present invention has been described hereinabove by way of embodiments thereof, it can be modified, without departing from the scope and nature of the subject invention.

**Claims**

1. A method of binarizing a grayscale image comprising a border having top, bottom, left and right sides surrounding characters into a black and white binarized image, said method comprising:

obtaining first and second binarized images of the grayscale image by dividing the grayscale image into sub-images for determining if a pixel is to be converted into white or black based on its colour value as compared to the average colour value of its sub-image, wherein one of the first and second binarized images is a black and white binarized border image comprising top, bottom, left and right borders and the other of the first and second binarized images is a black and white binarized characters image, wherein the binarized border image is obtained by using sub-images of a same first size for each pixel to be converted, and the binarized characters image is obtained by using sub-images of a same second size for each pixel to be converted, wherein said first size is larger than said second size;

obtaining the height $H$ and width $W$ of the binarized border image;

providing horizontal and vertical border density coefficients $C_h$, and $C_v$ respectively;

identifying in the binarized border image:

the first pixel line ($B_t$) from the top in the top border having a line black density value that is less than $W \times C_h$;

the first pixel line ($B_b$) from the bottom in the bottom border having a line black density value that is less than $W \times C_h$;

the first pixel column ($B_l$) from the left in the left border having a line black density value that is less *than $H \times C_v$*;

the first pixel column ($B_r$) from the right in the right border having a line black density value that is less than $H \times C_{vi}$;

thereby providing the border positions $B_t$, $B_b$, $B_l$, and $B_r$;

mapping the found border contour on the binarized characters image;

painting white the mapped border contour on the binarized characters image to obtain a binarized image without a border; and

combining the binarized image without a border with the binarized border image so as to obtain the black and white binarized image.

2. A method according to claim 1, wherein the position of a pixel $P$ in the binarized border image is ($x_p$, $y_p$), wherein $x_p$ is a pixel column position along $W$ and $y_p$ is a pixel line position along $H$, further comprising:

identifying in the binarized border image:

the first black pixel in each vertical pixel column from the column position at $xp = B_l$ to $x_p = B_r$ - 1 within the top border area defined from the position $y_p = B_t$ to $y_p = 0$ thereby providing the top border contour $E_t$;

the first black pixel in each vertical pixel column from the column position at $x_p = B_l$ to $x_p = B_r$ - 1 within the bottom border area defined from the position $y_p = B_b$ to $y_p = H$ 1 thereby providing the bottom border contour $E_b$,

the first black pixel in each vertical pixel line from the line position at $y_p = B_t$ to $y_p = B_b$- 1 within the left border area defined from the position $x_p = B_1$ to $x_p = 0$, thereby providing the left border contour $E_l$; and

the first black pixel in each vertical pixel line from the line position at $y_p = B_t$ to $y_p = B_b$ - 1 within the right border area defined from the position $x_p = B_r$ to $x_p = W$- 1 thereby providing the right border contour $E_r$.

3. A method according to claim 2, wherein painting white the mapped border contour on the binarized characters image comprises:

mapping the top, bottom, left and right border contours $E_t$, $E_b$, $E_l$, and $E_r$ on binarized characters image comprises;

painting white every pixel in the top border contour $E_t$ as well as all the pixels that are on the same column and above said pixel in the top border contour $E_t$;

painting white every pixel in the bottom border contour $E_b$ as well as all the pixels that are on the same column and below said pixel in the bottom border contour $E_b$;

painting white every pixel in the left border contour $E_l$ as well as all the pixels that are on the same line and left of said pixel in the left border contour $E_t$ and

painting white every pixel in the right border contour $E_r$ as well as all the pixels that are on the same line and right of said pixel in the right border contour $E_r$.

4. A device for binarizing a grayscale image comprising a border having top, bottom, left and right sides surrounding characters into a black and white binarized image, said device comprising:

a scanner for scanning the pixels of the grayscale image;

a controller for receiving information from the scanner, said controller configured for:

obtaining first and second binarized images of the grayscale image by dividing the grayscale image into sub-images for determining if a pixel is to be converted into white or black based on its colour value as compared to the average colour value of its sub-image, wherein one of the first and second binarized images is a black and white binarized border image comprising top, bottom, left and right borders and the other of the first and second binarized images is a black and white binarized characters image wherein the binarized border image is obtained by using sub-images of a same first size for each pixel to be converted; and the binarized characters image is obtained by using sub-images of a same second size for.each pixel to be converted, wherein said first size is larger than said second size;

obtaining the height $H$ and width $W$ of the binarized border image;

providing horizontal and vertical border density coefficients $C_h$ and $C_v$ respectively;

identifying in the binarized border image:

the first pixel line ($B_t$) from the top in the top border having a line black density value that is less than $Wx\ C_n$;

the first pixel line ($B_b$) from the bottom in the bottom border having a line black density value that is less than $Wx\ C_h$;

the first pixel column ($B_l$) from the left in the left border having a line black density value that is less than $H\ x\ C_v$;

the first pixel column ($B_r$) from the right in the right border having a line black density value that is less than $H\ x\ C_v$;

thereby providing the border positions $B_t$, $B_b$, $B_l$, and $B_r$ mapping the found border contour on the binarized characters image;

painting white the mapped border contour on the binarized characters image to obtain a binarized image without a border; and

combining the binarized image without a border with the binarized border image so as to obtain the black and white binarized image.

## Patentansprüche

1. Verfahren zum Binarisieren eines Graustufenbildes, das einen Rand umfasst, mit oberen, unteren, linken und rechten Seiten, die Zeichen umgeben, in ein binarisiertes Schwarz-Weiß-Bild, wobei das Verfahren umfasst:

Erhalten von ersten und zweiten binarisierten Bildern des Graustufenbildes durch Teilen des Graustufenbildes in Teilbilder, um zu ermitteln, ob ein Pixel zu schwarz oder weiß umzuwandeln ist, basierend auf einem Farbwert davon im Vergleich zum durchschnittlichen Farbwert des Teilbildes davon, wobei eines der ersten und zweiten binarisierten Bilder ein binarisiertes Schwarz-Weiß-Bild mit Rand ist, das obere, untere, linke und rechte Ränder umfasst, und das andere der ersten und zweiten binarisierten Bilder ein binarisiertes Schwarz-Weiß-Bild mit Zeichen ist, wobei das binarisierte Bild mit Rand unter Verwendung von Teilbildem einer gleichen ersten Größe für jedes umzuwandelnde Pixel erhalten wird, und wobei das binarisierte Bild mit Zeichen unter Verwendung von Teilbildem einer gleichen zweiten Größe für jedes umzuwandelnde Pixel erhalten wird, wobei die erste Größe größer als die zweite Größe ist;

Erhalten der Höhe $H$ und der Breite $W$ des binarisierten Bildes mit Rand;

Bereitstellen von Dichtekoeffizienten für horizontalen und vertikalen Rand $C_h$ bzw. $C_v$;

Identifizieren im binarisierten Bild mit Rand:

die erste Pixelzeile ($B_t$) von oben im oberen Rand mit einem Zeilenschwarzdichtenwert, der kleiner als $W\ x\ C_h$ ist;

die erste Pixelzeile ($B_b$) vom unten im unteren Rand mit einem Zeilenschwarzdichtenwert, der kleiner als $W\ x\ C_h$ ist;

die erste Pixelspalte ($B_l$) von links im linken Rand mit einem Zeilenschwarzdichtenwert, der kleiner als $H\ x\ C_v$ ist;

die erste Pixelspalte ($B_r$) von rechts im rechten Rand mit einem Zeilenschwarzdichtenwert, der kleiner als $H\ x\ C_v$ ist;

wodurch die Randpositionen $B_t$, $B_b$, $B_l$ und $B_r$ bereitgestellt werden;
Kartieren der festgestellten Randkontur auf dem binarisierten Bild mit Zeichen;
Ausweißen der kartierten Randkontur auf dem binarisierten Bild mit Zeichen, um ein binarisiertes Bild ohne Rand zu erhalten; und
Kombinieren des binarisierten Bildes ohne Rand mit dem binarisierten Bild mit Rand, um binarisierte Schwarz-Weiß-Bild zu erhalten.

2. Verfahren nach Anspruch 1, wobei die Position eines Pixels $P$ im binarisierten Bild mit Rand $(x_p, y_p)$ ist, wobei $x_p$ eine Pixelspaltenposition entlang $W$ ist und $y_p$ eine Pixelzeilenposition entlang $H$ ist, das darüber hinaus umfasst:

Identifizieren im binarisierten Bild mit Rand:

das erste schwarze Pixel in jeder vertikalen Pixelspalte von der Spaltenposition bei $x_p = Bi$ bis $x_p = B_r - 1$ innerhalb des oberen Randbereichs, der von der Position $y_p = B_t$ bis $y_p = 0$ definiert ist, wodurch die obere Randkontur $E_t$ bereitgestellt wird;
das erste schwarze Pixel in jeder vertikalen Pixelspalte von der Spaltenposition bei $x_p = B_l$ bis $x_p = B_r - 1$ innerhalb des unteren Randbereichs, der von der Position $y_p = B_b$ bis $y_p = H\,1$ definiert ist, wodurch die untere Randkontur $E_b$ bereitgestellt wird;
das erste schwarze Pixel in jeder vertikalen Pixelzeile von der Zeilenposition bei $y_p = B_t$ bis $y_p = B_b - 1$ innerhalb des linken Randbereichs, der von der Position $x_p = B_1$ bis $x_p = 0$ definiert ist, wodurch die linke Randkontur $E_l$ bereitgestellt wird; und
das erste schwarze Pixel in jeder vertikalen Pixelzeile von der Zeilenposition bei $y_p = B_t$ bis $y_p = B_b - 1$ innerhalb des rechten Randbereichs, der von der Position $x_p = B_r$ bis $x_p = W-1$ definiert ist, wodurch die rechte Randkontur $E_r$ bereitgestellt wird.

3. Verfahren nach Anspruch 2, wobei das Ausweißen der kartierten Randkontur auf dem binarisierten Bild mit Zeichen umfasst:

Kartieren der oberen, unteren, linken und rechten Randkontouren $E_t$, $E_b$, $E_l$ und $E_r$ auf dem binarisierten Bild mit Zeichen umfasst;
Ausweißen jedes Pixels in der oberen Randkontur $E_t$ sowie aller Pixel, die auf der gleichen Spalte und über dem Pixel in der oberen Randkontur $E_t$ liegen;
Ausweißen jedes Pixels in der unteren Randkontur $E_b$ sowie aller Pixel, die auf der gleichen Spalte und unter dem Pixel in der unteren Randkontur $E_b$ liegen;
Ausweißen jedes Pixels in der linken Randkontur $Ei$ sowie aller Pixel, die auf der gleichen Zeile und links des Pixels in der linken Randkontur $E_l$, liegen; und
Ausweißen jedes Pixels in der rechten Randkontur $E_r$ sowie aller Pixel, die auf der gleichen Zeile und rechts des Pixels in der linken Randkontur $E_r$ liegen.

4. Einrichtung zum Binarisieren eines Graustufenbildes, das einen Rand mit oberen, unteren, linken und rechten Seiten umfasst, die Zeichen umgeben, in ein binarisiertes Schwarz-Weiß-Bild, wobei die Einrichtung umfasst:

einen Scanner zum Scannen der Pixel des Graustufenbildes;
eine Steuereinheit zum Empfangen von Informationen vom Scanner, wobei die Steuereinheit konfiguriert ist zum:

Erhalten von ersten und zweiten binarisierten Bildern des Graustufenbildes durch Teilen des Graustufenbildes in Teilbilder, um zu ermitteln, ob ein Pixel zu schwarz oder weiß umzuwandeln ist, basierend auf einem Farbwert davon im Vergleich zum durchschnittlichen Farbwert des Teilbildes davon, wobei eines der ersten und zweiten binarisierten Bilder ein binarisiertes Schwarz-Weiß-Bild mit Rand ist, das obere, untere, linke und rechte Ränder umfasst, und das andere der ersten und zweiten binarisierten Bilder ein binarisiertes Schwarz-Weiß-Bild mit Zeichen ist, wobei das binarisierte Bild mit Rand unter Verwendung von Teilbildem einer gleichen ersten Größe fur jedes umzuwandelnde Pixel erhalten wird, und wobei das binarisierte Bild mit Zeichen unter Verwendung von Teilbildem einer gleichen zweiten Größe fur jedes umzuwandelnde Pixel erhalten wird, wobei die erste Größe größer als die zweite Größe ist;
Erhalten der Höhe $H$ und der Breite $W$ des binarisierten Bildes mit Rand;
Bereitstellen von Dichtekoeffizienten für horizontalen und vertikalen Rand $C_h$ bzw. $C_v$;
Identifizieren im binarisierten Bild mit Rand:

die erste Pixelzeile ($B_t$) von oben im oberen Rand mit einem Zeilenschwarzdichtenwert, der kleiner als $W$ x $C_h$ ist;

die erste Pixelzeile ($B_h$) vom unten im unteren Rand mit einem Zeilenschwarzdichtenwert, der kleiner als $W$ x $C_h$ ist;

die erste Pixelspalte ($B_l$) von links im linken Rand mit einem Zeilenschwarzdichtenwert, der kleiner als $H$ x $C_v$ ist;

die erste Pixelspalte ($B_r$) von rechts im rechten Rand mit einem Zeilenschwarzdichtenwert, der kleiner als $H$ x $C_v$ ist;

wodurch die Randpositionen $B_t$, $B_b$, $B_l$ und $B_r$ bereitgestellt werden;

Kartieren der festgestellten Randkontur auf dem binarisierten Bild mit Zeichen;

Ausweißen der kartierten Randkontur auf dem binarisierten Bild mit Zeichen, um ein binarisiertes Bild ohne Rand zu erhalten; und

Kombinieren des binarisierten Bildes ohne Rand mit dem binarisierten Bild mit Rand, um binarisierte Schwarz-Weiß-Bild zu erhalten.


**Revendications**

1. Procédé de binarisation d'une image en échelle de gris comprenant une bordure comportant des côtés supérieur, inférieur, gauche et droit entourant des caractères dans une image binarisée en noir et blanc, ledit procédé comprenant :

l'obtention de première et deuxième images binarisées de l'image en échelle de gris en divisant l'image en échelle de gris en sous-images pour déterminer si un pixel doit être converti en blanc ou en noir sur la base de sa valeur de couleur telle que comparée à la valeur de couleur moyenne de sa sous-image, dans lequel l'une des première et deuxième images binarisées est une image à bordures binarisée en noir et blanc comprenant des bordures supérieure, inférieure, gauche et droite et l'autre des première et deuxième images binarisées est une image de caractères binarisée en noir et blanc, dans lequel l'image à bordures binarisée est obtenue en utilisant des sous-images d'une même première taille pour chaque pixel à convertir, et l'image de caractères binarisée est obtenue en utilisant des sous-images d'une même deuxième taille pour chaque pixel à convertir, dans lequel ladite première taille est plus grande que ladite deuxième taille ;

l'obtention de la hauteur H et de la largeur W de l'image à bordures binarisée ;

la fourniture de coefficients de densité de bordures horizontales et verticales $C_h$ et $C_v$, respectivement ;

l'identification dans l'image à bordures binarisée :

de la première ligne de pixels ($B_t$) à partir du haut dans la bordure supérieure ayant une valeur de densité de noir de ligne qui est inférieure à $W$ x $C_h$ ;

de la première ligne de pixels ($B_b$) à partir du bas dans la bordure inférieure ayant une valeur de densité de noir de ligne qui est inférieure à $W$ x $C_h$ ;

de la première colonne de pixels ($B_1$) à partir de la gauche dans la bordure gauche ayant une valeur de densité de noir de ligne qui est inférieure à $H$ x $C_v$ ;

de la première colonne de pixels ($B_r$) à partir de la droite dans la bordure droite ayant une valeur de densité de noir de ligne qui est inférieure à $H$ x $C_v$ ;

la fourniture de ce fait des positions de bordure $B_t$, $B_b$, $B_l$ et Br ;

le mappage du contour de bordure trouvé sur l'image de caractères binarisée ;

la coloration en blanc du contour de bordure mappé sur l'image de caractères binarisée pour obtenir une image binarisée sans bordure ; et

la combinaison de l'image binarisée sans bordure avec l'image à bordures binarisée de manière à obtenir l'image binarisée en noir et blanc.

2. Procédé selon la revendication 1, dans lequel la position d'un pixel P dans l'image à bordures binarisée est $(x_p, y_p)$, où $x_p$ est une position de colonne de pixels le long de W et $y_p$ est une position de ligne de pixels le long de H, comprenant en outre :

l'identification dans l'image à bordures binarisée :

du premier pixel noir dans chaque colonne de pixels verticale de la position de colonne à $x_p = B_l$ jusqu'à

$x_p = B_r - 1$, dans la zone de bordure supérieure définie de la position $y_p = B_1$ à $y_p = 0$, fournissant de ce fait le contour de bordure supérieur $E_t$ ;

du premier pixel noir dans chaque colonne de pixels verticale de la position de colonne à $x_p = B_l$ à $x_p = B_r - 1$ dans la zone de bordure inférieure définie de la position $y_p = B_b$ à $y_p = H1$, fournissant de ce fait le contour de bordure inférieur $E_b$,

du premier pixel noir dans chaque ligne de pixels verticale de la position de ligne à $y_p = B_t$ à $y_p = B_b - 1$ dans la zone de bordure gauche définie de la position $x_p = B_1$ à $x_p = 0$, fournissant de ce fait le contour de bordure gauche $E_l$, et

du premier pixel noir dans chaque ligne de pixels verticale de la position de ligne à $y_p = B_t$ à $y_p - B_b - 1$ dans la zone de bordure droite définie de la position $x_p = B_r$ à $x_p = W - 1$, fournissant de ce fait le contour de bordure droit $E_r$.

3. Procédé selon la revendication 2, dans lequel la coloration en blanc du contour de bordure mappé sur l'image de caractères binarisée comprend :

le mappage des contours de bordure supérieur, inférieur, gauche et droit $E_t$, $E_b$, $E_l$ et $E_r$ sur une image de caractères binarisée comprend :

la coloration en blanc de chaque pixel dans le contour de bordure supérieur $E_t$ ainsi que de tous les pixels qui sont dans la même colonne et au-dessus dudit pixel dans le contour de bordure supérieur $E_t$ ;

la coloration en blanc de chaque pixel dans le contour de bordure inférieur $E_b$ ainsi que de tous les pixels qui sont dans la même colonne et au-dessous dudit pixel dans le contour de bordure inférieur $E_b$ ;

la coloration en blanc de chaque pixel dans le contour de bordure gauche $E_l$ ainsi que de tous les pixels qui sont sur la même ligne et à gauche dudit pixel dans le contour de bordure gauche $E_l$; et

la coloration en blanc de chaque pixel dans le contour de bordure droit $E_r$ ainsi que de tous les pixels qui sont sur la même ligne et à droite dudit pixel dans le contour de bordure droit $E_r$.

4. Dispositif pour binariser une image en échelle de gris comprenant une bordure comportant des côtés supérieur, inférieur, gauche et droit entourant des caractères dans une image binarisée en noir et blanc, ledit dispositif comprenant :

un scanner pour balayer les pixels de l'image en échelle de gris ;

un contrôleur pour recevoir des informations du scanner, ledit contrôleur étant configuré pour :

obtenir des première et deuxième images binarisées de l'image en échelle de gris en divisant l'image en échelle de gris en sous-images pour déterminer si un pixel doit être converti en blanc ou en noir sur la base de sa valeur de couleur telle que comparée à la valeur de couleur moyenne de sa sous-image, dans lequel l'une des première et deuxième images binarisées est une image à bordures binarisée en noir et blanc comprenant des bordures supérieure, inférieure, gauche et droite et l'autre des première et deuxième images binarisées est une image de caractères binarisée en noir et blanc, dans lequel l'image à bordures binarisée est obtenue en utilisant des sous-images d'une même première taille pour chaque pixel à convertir ; et l'image de caractères binarisée est obtenue en utilisant des sous-images d'une même deuxième taille pour chaque pixel à convertir, dans lequel ladite première taille est plus grande que ladite deuxième taille ;

obtenir la hauteur H et la largeur W de l'image à bordures binarisée ;

fournir des coefficients de densité de bordures horizontales et verticales $C_h$ et $C_v$, respectivement ;

identifier dans l'image à bordures binarisée :

la première ligne de pixels ($B_t$) à partir du haut dans la bordure supérieure ayant une valeur de densité de noir de ligne qui est inférieure à $W \times C_h$ ;

la première ligne de pixels ($B_b$) à partir du bas dans la bordure inférieure ayant une valeur de densité de noir de ligne qui est inférieure à $W \times C_h$ ;

la première colonne de pixels ($B_1$) à partir de la gauche dans la bordure gauche ayant une valeur de densité de noir de ligne qui est inférieure à $H \times C_v$ ;

la première colonne de pixels ($B_r$) à partir de la droite dans la bordure droite ayant une valeur de densité de noir de ligne qui est inférieure à $H \times C_v$ ;

fournir de ce fait les positions de bordure $B_t$, $B_b$, $B_l$ et Br ;

mapper le contour de bordure trouvé sur l'image de caractères binarisée ;

colorer en blanc le contour de bordure mappé sur l'image de caractères binarisée pour obtenir une image binarisée sans bordure ; et

combiner l'image binarisée sans bordure avec l'image à bordures binarisée de manière à obtenir l'image binarisée en noir et blanc.

Original

Binarized

*FIG_1 (Prior Art)*

Ipo

Original rpo

Binarized rpb

*FIG_2 (Prior Art)*

A B

*FIG_3 (Prior Art)*

Subl $P_1$

Pixel $P_1$

Subl $P_2$

Pixel $P_2$

*FIG_4*

_FIG_ . 5A

_FIG_ . 5B

Original ── 10

Binarized ── 16

26

32

*FIG_6A*

Original ── 12

Binarized ── 18

28

34

*FIG_6B*

Original ── 14

24   22

Binarized ── 20

30

36

*FIG_6C*

42

8225 0▲33

40

48

44

50

8225 0▲33

46

FIG_7

54

8225 0A 33

52

FIG_8

68

66

6659 ZX78

60

68

66

6659 ZX78

62

68

66

6659 ZX78

64

FIG_9

70 — Binarized image for clear characters 76

·8225 0▲ 33

Map the border contour

72 — Binarized image for clear border

Find the border
contour

8225 0A 33

74

_FIG_ _10_

Ib$_b$

FS$_h$  FS$_v$  T  BORDER  LS$_v$

y=0

S$_h$  (y)

L

**XYZ**

R

SI-Ib$_b$

y=H

LS$_h$

B

x=0  (x)  x=W

S$_v$

_FIG_ _11_

Top Border
Histogram

Line
black
density
value

Horizontal
lines

$B_t$

$FS_h$

FIG. 12A

Bottom Border
Histogram

Line
black
density
value

Horizontal
lines

$B_b$

$LS_h$

FIG. 12B

Left Border
Histogram

Line
black
density
value

Vertical
colums

$B_l$

$FS_v$

FIG. 12C

Right Border
Histogram

Line
black
density
value

Vertical
colums

$B_r$

$LS_v$

FIG. 12D

$B_l$     TBA     $B_r$

$Yp=0$

$Yp=B_t$

$B_t$

8225QA 33

$(y)$

$B_b$

$Yp=H$

$Xp=0$   $Xp=B_l$     $(x)$     $Xp=W$

$Xp=Br-1$    $Xp=Br$

FIG_13A

$B_l$       $B_r$

$Yp=0$

$Yp=B_t$

$B_t$

8225QA 33

$(y)$

$B_b$

$Yp=B_b$

$Yp=H$

BBA

$Xp=0$   $Xp=B_l$     $(x)$     $Xp=W$

$Xp=Br-1$    $Xp=Br$

FIG_13B

FIG.13C

FIG.13D

$FIG\_14$

$FIG\_15$

$FIG\_16$

FIG_17A

FIG_17B

FIG_17C

8225 OA 33 —40

8225 OA 33 —46

8225 OA 33 —52

8225 OA 33 —100

FIG_18

6659 ZX 78 —60

6659 ZX 78 —62

6659 ZX 78 —64

6659 ZX 78 —102

FIG_19

_FIG_ 20A

_FIG_ 20B

*FIG_20C*

*FIG_20D*

FIG_21A

FIG_21B

FIG_22A

FIG_22B

FIG_23A

FIG_23B

_FIG_ _24_

200

202

204

_FIG_ _25_

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61006517 B

- US 2006120602 A

**Non-patent literature cited in the description**

- **PIERRE D. WELLNER.** *Adaptive Thresholding for the DigitalDesk, http://www,xrce.xerox.com/publis/cam-trs/pdf/1993/epc-1993-110.pdf*

- **K. CASTLEMAN.** Digital Image Processing. Prentice-Hall Signal Processing Series, 1979